(19) Europäisches Patentamt
European Patent Office
Office européen des brevets

(11) **EP 3 301 775 A1**

(12) **EUROPEAN PATENT APPLICATION**

(43) Date of publication:
**04.04.2018 Bulletin 2018/14**

(51) Int Cl.:
**H02J 3/01** *(2006.01)*          **H02J 3/14** *(2006.01)*
**H02J 3/18** *(2006.01)*          **H02J 7/34** *(2006.01)*

(21) Application number: **16191884.2**

(22) Date of filing: **30.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Schweiz AG**
**5400 Baden (CH)**

(72) Inventors:
• **DELINCE, Francois**
  **5640 Biesme (BE)**
• **BONHOMME, Henri**
  **6210 Frasnes lez Gosselies (BE)**
• **MASSIN, Sebastien**
  **7050 Masnuy-Saint-Jean (BE)**

(74) Representative: **Axell, Kristina**
  **ABB AB**
  **Intellectual Property**
  **Forskargränd 7**
  **721 78 Västerås (SE)**

(54) **A POWER CONVERTER SYSTEM FOR POWER QUALITY COMPENSATION AND LOAD BALANCING CONNECTED TO AN ELECTRIC POWER DISTRIBUTION GRID**

(57)     The present disclosure relates to a power converter system (1) for connection to an electric power distribution grid, wherein the power converter system (1) comprises: a bidirectional multi-phase AC/DC converter (3) provided with a plurality of AC terminals (3a) configured to be connected to a respective electric phase of the electric power distribution grid, and DC terminals (3b), and a control system (5) configured to control the AC/DC converter (3) to redirect current from one AC terminal (3a) of the AC/DC converter (3), to another AC terminal (3a) of the AC/DC converter (3), through AC/DC conversion and subsequent DC/AC conversion for power quality compensation, and to simultaneously provide a power flow from the AC terminals (3a) through the AC/DC converter (3) to the DC terminals (3b).

Fig. 2

**Description**

**TECHNICAL FIELD**

The present disclosure generally relates to electric power distribution grids. In particular, it relates to a power converter system for connection to an electric power distribution grid.

**BACKGROUND**

Electric power distribution grids are networks configured to deliver electricity to consumers, which are constantly subjected to varying load conditions. The energy consumption pattern in the commercial and residential sectors follows a cycle of peak and low load conditions. Peak load periods coinciding for several consumers can lead to a shortage of power from the supply utilities. This may result in temporary overloading of the network and even lead to tripping of some sensitive loads.

Energy storage systems connectable to the grid may absorb energy from the grid for storage when electrical energy demand is low. The energy stored in an energy storage system may subsequently be injected into the grid when the electrical energy demand increases. By quickly bridging the gap between the demand and supply of electrical power, an energy storage system helps in maintaining the grid frequency and voltages within acceptable limits.

In addition to varying load conditions the unpredictability of green energy sources such as wind and solar plants imposes additional burden on the network operators. Energy storage systems can reduce the impact of green energy sources on the network by offering a "buffer" which can absorb excess power and release the same when the output from these sources falls short.

**SUMMARY**

Power quality compensation is another aspect of the concept of grid quality improvement, and generally encompasses reactive power compensation, harmonic filtering and load balancing. Reactive power compensating implies compensating the reactive power consumed by for example electrical motors and transformers. Harmonic filtering implies mitigating harmonic currents generated by nonlinear loads like rectifiers, drives, furnaces, welding machines, converters, and electronic equipment in the grid. Load balancing in the context of power quality compensation refers to providing compensation in current/voltage(s) across the electric phases in case of uneven load distribution over the electric phases of the grid.

Power quality compensation as well as power flow control for energy storage may be provided by means of power converters. Harmonic filtering achieved by means of power converters is for example disclosed in the paper "Harmonic compensation with active front-end converters based only on grid voltage measurements" by Arco et al., published in Renewable Power Generation Conference (RPG 2014).

The present inventors have realised that using a first power converter for energy storage and a second power converter for power quality compensation may not be as efficient as it could potentially be.

It has been found that simultaneous control of active power energy storage and power quality compensation may be obtained as a result of the root means square (RMS) characteristics of a current waveform which is a combination of several frequencies, or even 90° phase-shifted components and which therefore can be expressed as:

$$I(t) = I_a \cdot \cos(\omega t) + I_r \cdot \sin(\omega t) + \sum_k I_k \cdot \cos(k\omega t + \Phi_k)$$

where $I_a$ is the fundamental component of the active current, $I_r$ is the fundamental component of the reactive current, k is an integer equal to or greater than 2, $I_k$ is the $k^{th}$ harmonic $\omega$ is the angular frequency, and $\Phi_n$ is the phase of the $n^{th}$ harmonic.

The RMS current, which is associated with the thermal effect, is equal to

$$I_{RMS} = \frac{\sqrt{I_a^2 + I_r^2 + \sum_k I_k^2}}{\sqrt{2}}$$

This characterisation implies that simultaneous active energy storage and power quality compensation may be performed by a single AC/DC converter, with a thermal load that will be the resultant of the RMS combination of components, and not the simple addition of them.

In view of the above, a general object of the present disclosure is to provide a power converter system configured to be connected to an electric power distribution grid which solves or at least mitigates the problems of the prior art.

There is hence according to a first aspect of the present disclosure provided a power converter system for connection to an electric power distribution grid, wherein the power converter system comprises: a bidirectional multi-phase AC/DC converter provided with a plurality of AC terminals configured to be connected to a respective electric phase of the electric power distribution grid, and DC terminals, and a control system configured to control the AC/DC converter to redirect current from one AC terminal of the AC/DC converter, to another AC terminal of the AC/DC converter, through AC/DC conversion and subsequent DC/AC conversion for power quality compensation, and to simultaneously provide a power flow from the AC terminals through the AC/DC converter to the DC terminals.

The electric power distribution grid is an AC power distribution grid.

With "bidirectional AC/DC converter" is here meant a power converter which is able to convert AC power to DC power when active or reactive energy flows in a first direction, and to convert DC power to AC power when energy flows in a second direction opposite to the first direction. In the present case, the bidirectional AC/DC converter is configured to convert AC power from the electric power distribution grid to DC power to be fed e.g. to a battery when energy flows in the first direction. Moreover, the bidirectional AC/DC converter is configured to convert AC power to DC power and then directly back to AC power redirected to a selected electric phase or AC terminal, without any intermediate storage of the energy.

Simultaneous control of power flow from the electric power distribution grid through the AC/DC converter for energy storage and power quality compensation by means of a single AC/DC converter provides an unexpected synergistic effect in that it is possible to obtain a more efficient use of the AC/DC converter than if energy storage and power quality compensation would be performed by two separate AC/DC converters.

The thermal load is the resultant of the combination of RMS current components illustrated above. This means that, if for example the rating of the AC/DC converter is 100 A, then one possibility to control the AC/DC converter by means of the control system is that 70.7 A $I_a$ is used for active power energy storage, i.e. energy corresponding to this amount is transferred through the AC/DC converter for energy storage, and 70.7 A $I_r$ is used for reactive power compensation by being redirected back to the electric power distribution grid, in particular to an electric phase which requires power quality compensation. This could be seen as a "rating" of 70.7 A + 70.7 A = 141.4 A, which in a sense is higher than 100 A. The resultant is however 100 A, due to the active power being real and the reactive power being complex.

According to one embodiment the power quality compensation includes at least one of reactive power compensation, harmonic compensation, and load balancing. Hereto, the control system is able to control the AC/DC converter such that any power quality compensation aspect is performed either alone or in any combination simultaneously, as presently required by the grid.

According to one embodiment the control system is configured to control the AC/DC converter to provide a power flow from the DC terminals through the AC/DC converter to the AC terminals for flow control.

According to one embodiment the AC/DC converter has a current rating and the control system is configured to control the AC/DC converter based on a division of the current rating to a part corresponding to the power quality compensation and another part corresponding to energy storage.

According to one embodiment the AC/DC converter comprises a plurality of CAN bus interfaces, a first CAN bus interface of the plurality of CAN bus interfaces being configured to be connected to the control system to provide communication between the AC/DC converter and the control system.

According to one embodiment a second CAN bus interface of the plurality of CAN bus interfaces is configured to be connected to a battery management system.

According to one embodiment a third CAN bus interface of the plurality of CAN bus interfaces is configured to be connected to a higher level control system configured to provide setpoint values to the control system.

According to one embodiment the AC/DC converter has a nominal voltage rating of at most 690 V.

There is according to a second aspect of the present disclosure provided a method of controlling a bidirectional multi-phase AC/DC converter connected to an electric power distribution grid, and provided with a plurality of AC terminals connected to a respective electric phase of the electric power distribution grid, and DC terminals connected to an energy storage unit, the method comprising: a) controlling the AC/DC converter to redirect current from one AC terminal to another AC terminal, through AC/DC conversion and subsequent DC/AC conversion for power quality compensation, and to simultaneously provide a power flow from the AC terminals through the AC/DC converter to the DC terminals and the energy storage unit.

According to one embodiment the power quality compensation includes at least one of reactive power compensation, harmonic compensation and load balancing.

There is according to a third aspect of the present disclosure provided an energy storage system configured to be connected to an electric power distribution grid, comprising: a power converter system according to the first aspect, and an energy storage unit configured to be connected to the AC/DC converter.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

## BRIEF DESCRIPTION OF THE DRAWINGS

The specific embodiments of the inventive concept will now be described, by way of example, with reference to the accompanying drawings, in which:

Fig. 1 shows a block diagram of an example of a power converter system;

Fig. 2 shows a block diagram of an energy storage system comprising the power converter system in Fig. 1;

Fig. 3 shows an environment in which the energy storage system may be installed and operated; and

Fig. 4 shows a flowchart of a method of controlling a bidirectional AC/DC converter connected to an electric power distribution grid.

## DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

The present disclosure relates to a power converter system configured to be connected to an AC electric power distribution network or grid. The power converter system includes a bidirectional multi-phase AC/DC converter, which means it can convert AC to DC voltage when energy flows in a first direction and from DC to AC when energy flows in a second direction. The AC/DC converter has a plurality of AC terminals configured to be connected to a respective electric phase of the electric power distribution grid, and two DC terminals configured to be connected to an energy storage unit such as a battery.

The power converter system further includes a control system configured to simultaneously control power flow through the AC/DC converter and power quality compensation. The control system is configured to control the energy flow direction and the amount of energy flowing through the AC/DC converter based on a present power requirement in the electric power distribution grid.

The control system is configured to control the AC/DC converter, to provide power quality compensation by redirecting current from one electric phase to another, i.e. from one AC terminal to another AC terminal of the AC/DC converter, through AC/DC conversion and subsequently DC/AC conversion. By controlling the internal switching devices of the AC/DC converter by means of the control system, power quality compensation in the form of reactive current injection into the electric power distribution grid and/or harmonic compensation and/or load balancing may be provided.

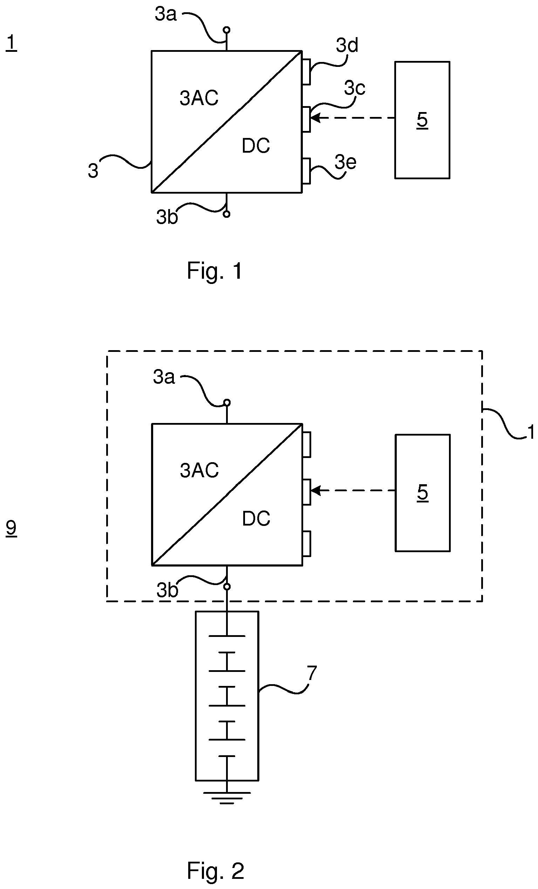

An example of a power converter system 1 configured to be connected to an electric power distribution grid will now be described with reference to Fig. 1.

The power converter system 1 comprises a bidirectional multi-phase AC/DC converter 3 and a control system 5. The AC/DC converter may typically be a three-phase AC/DC converter. The AC/DC converter 3 is a low voltage or a medium voltage AC/DC converter. The AC/DC converter 3 may for example have a nominal voltage rating of at most 690 V.

The bidirectional AC/DC converter 3 is a switchable power converter. Hereto, the rectifying or inverting elements of the AC/DC converter 3 are switching units fully controllable by means of the control system 5. The on-state and the off-state of the switching units are thus controllable by means of the control system 5. The switching units may for example be semiconductor switches, for example Insulated Gate Bipolar Transistors (IGBT).

The AC/DC converter 3 has AC terminals 3a configured to be connected to an electric power distribution grid, for example directly or via a transformer. The AC/DC converter 3 furthermore has DC terminals 3b configured to be connected to an energy storage unit. It may be noted that the schematic block diagram shown in Fig. 1 is a "single line diagram" so that only one electric phase/AC/DC terminal is depicted.

The control system 5 is configured to control the energy flow direction through the AC/DC converter 3. The control system 5 is configured to receive setpoint values related to the present energy demand in the electric power distribution grid. Hereto, the control system 5 is able to control the voltage level of the AC/DC converter 3 by suitably switching the switching units of the AC/DC converter 3 to ensure that the energy flows either in a first direction from the AC terminals 3a to the DC terminals 3b to provide absorption of energy from the electric power distribution grid, or in a second direction from the DC terminals 3b to the AC terminals 3a, to inject energy from an energy storage unit connected to the DC terminals 3b of the AC/DC converter 3 into the electric power distribution grid.

Simultaneously with controlling the energy flow or power flow direction, in particular in the aforementioned first direction, the control system 5 is configured to control the AC/DC converter 3 to redirect current from one AC terminal 3a to another AC terminal 3a to thereby provide power quality compensation in any electric phase of the electric power distribution grid requiring such compensation. By proper switching of the switching units of the AC/DC converter, reactive power compensation and/or harmonic compensation and/or load balancing may be provided simultaneously with power flow control for energy storage.

The exemplified AC/DC converter 3 may furthermore comprise a plurality of Controller Area Network (CAN) bus interfaces 3c-3e. A first CAN bus interface 3c may for example be configured to be connected to the control system 5 to enable communication between the control system 5 and the AC/DC converter 3.

According to one variation, a second CAN bus interface 3d is configured to be connected to a battery management system e.g. in case the AC/DC converter 3 and in particular the DC terminals 3b are configured to be connected to an energy storage unit such as a battery. The battery management system may provide parameter data such as voltages and temperatures regarding the battery or a battery component to the AC/DC converter 3.

According to one variation, a third CAN bus interface 3e is configured to be connected to a higher level control system which gives the setpoint values to the control system 5, and could for example be a Supervisory Control And Data Acquisition (SCADA) system configured to manage the operation of the electric power distribution grid.

It should be noted that above devices are merely examples of what type of connections the CAN bus interfaces can be used for. Other examples would according to one possible implementation be for different controllers of the control system, one for power quality compensation and one for power flow direction control, in case individual controllers are used for power quality compensation control and energy storage control. Multiple CAN bus interfaces in general allows the power converter system to be flexible in interfacing different logical blocks that interact together to achieve the storage/compensation goals.

Fig. 2 shows an energy storage system 9 comprising the power converter system 1 and an energy storage unit 7.

The energy storage unit 7 may for example be a battery or a supercapacitor. The energy storage unit 7 may comprises a plurality of series-connected energy units or battery units. According to the present example, the energy storage unit 7 is a battery comprising a plurality of series-connected battery units. Each battery unit may for example have a voltage rating in the range 1-10V. By series-connecting battery units, a desired battery voltage rating may be obtained.

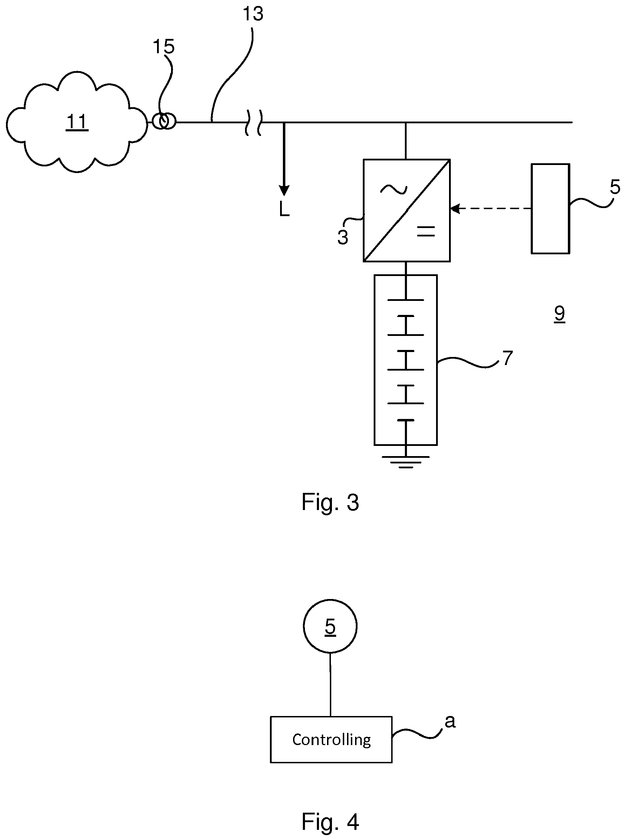

Fig. 3 shows an environment in which the energy storage system 9 may be installed and used. This environment comprises a power transmission grid 11, an electric power distribution grid 13 connected to the power transmission grid 11, and a transformer 15 configured to step down the voltage level of the power transmission grid 11 to a suitable level for the electric power distribution grid 13. The voltage level of the electric power distribution grid 13 may for example be up to 690 V AC, for example 480 V AC or 400 V AC.

A plurality of loads L, or consumers such as households and/or industries, are connected to the electric power distribution grid 13. The energy storage system 9 is also connected to the electric power distribution grid 13. In particular, the AC/DC converter 3 is connected to the electric power distribution grid 13 by means of the AC terminals 3a.

In operation, the control system 5 obtains setpoint values related to the present power requirements of the electric power distribution grid 13. If for example, there is an excessive supply of power available to the electric power distribution grid 13, the control system 5 may be configured to control the AC/DC converter 3 such that the energy flows in a first direction from the electric power distribution grid 13 through the AC/DC converter 3 to the energy storage unit 7 for storage.

The control system 5 may at a later stage obtain a setpoint value to control the AC/DC converter 3 to push energy back into the electric power distribution grid 13 from the energy storage unit 7.

When the control system 5 controls the AC/DC converter 3 to store energy in the energy storage unit 7, the control system 5 simultaneously also controls the AC/DC converter 3 to redirect current from one electric phase to one or more other electric phases. Hereto, with reference to Fig. 4, in a step a) the control system 5, when so required, controls the AC/DC to redirect current flow from one phase of the electric power distribution grid 13 via the AC/DC converter 3 to another phase of the electric power distribution grid 13, thereby providing power quality compensation. This is achieved by first performing an AC/DC conversion of current received at one of the AC terminals 3a and then subsequently a DC/AC conversion, and providing a current injection into the grid 13 via another AC terminal 3a. In step a) the control system 5 simultaneously with the above-described power quality compensation, controls the AC/DC converter 3 to push energy in a first direction, from the electric power distribution grid 13 to the energy storage unit 7, based on a present energy storage requirement.

By suitably switching the switching units of the AC/DC converter 3 by means of the control system 5, the power quality compensation may include reactive power compensation and/or harmonic compensation simultaneously with the provision of energy storage. For example, if the power quality compensation is directed to reactive power compensation, a suitable amount of reactive current may be injected by the AC/DC converter 3 into the electric power distribution grid 13 by proper switching of the switching units. If harmonic compensation is required, one or more suitable harmonics included in the grid current, phase-shifted 180 degrees relative to the harmonics in the grid current, may be injected for cancelling out the current harmonics in the grid 13. According to another example, a combination of active power, by means of current injection of the fundamental obtained from the energy storage unit 7, and reactive current and/or harmonics and/or redistribution of current between the phases for load balancing, may be provided into the electric power distribution grid 13 by means of suitable control of the AC/DC converter 3.

It is to be noted that the control system 5 is also able to provide only energy storage functionality, if necessary, or only power quality compensation at the full rating of the AC/DC converter if so required, depending on the present requirements on the electric power distribution grid and/or on the objectives of the grid operator.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1.    A power converter system (1) for connection to an electric power distribution grid (13), wherein the power converter system (1) comprises:

   a bidirectional multi-phase AC/DC converter (3) provided with a plurality of AC terminals (3a) configured to be connected to a respective electric phase of the electric power distribution grid (13), and DC terminals (3b), and a control system (5) configured to control the AC/DC converter (3) to redirect current from one AC terminal (3a) of the AC/DC converter (3), to another AC terminal (3a) of the AC/DC converter (3), through AC/DC conversion and subsequent DC/AC conversion for power quality compensation, and to simultaneously provide a power flow from the AC terminals (3a) through the AC/DC converter (3) to the DC terminals (3b).

2.    The power converter system (1) as claimed in claim 1, wherein the power quality compensation includes at least one of reactive power compensation, harmonic compensation and load balancing.

3.    The power converter system (1) as claimed in any of the preceding claims, wherein the control system (5) is configured to control the AC/DC converter (3) to provide a power flow from the DC terminals (3b) through the AC/DC converter (3) to the AC terminals (3a) for flow control.

4.    The power converter system (1) as claimed in any of the preceding claims, wherein the AC/DC converter (3) has a current rating and the control system is configured to control the AC/DC converter (3) based on a division of the current rating to a part corresponding to the power quality compensation and another part corresponding to energy storage.

5.    The power converter system (1) as claimed in any of the preceding claims, wherein the AC/DC converter (3) comprises a plurality of CAN bus interfaces (3c-3e), a first CAN bus interface (3c) of the plurality of CAN bus interfaces (3c-3e) being configured to be connected to the control system (5) to provide communication between the AC/DC converter (3) and the control system (5).

6.    The power converter system (1) as claimed in claim 5, wherein a second CAN bus interface (3d) of the plurality of CAN bus interfaces (3c-3e) is configured to be connected to a battery management system.

7.    The power converter system (1) as claimed in claim 5 or 6, wherein a third CAN bus interface (3e) of the plurality of CAN bus interfaces (3c-3e) is configured to be connected to a higher level control system configured to provide setpoint values to the control system (5).

8.    The power converter system (1) as claimed in any of the preceding claims, wherein the AC/DC converter (3) has a nominal voltage rating of at most 690 V.

9.    A method of controlling a bidirectional multi-phase AC/DC converter (3) connected to an electric power distribution grid (13), and provided with a plurality of AC terminals (3a) connected to a respective electric phase of the electric power distribution grid (13), and DC terminals (3b) connected to an energy storage unit (7), the method comprising:

a) controlling the AC/DC converter (3) to redirect current from one AC terminal (3a) to another AC terminal (3a), through AC/DC conversion and subsequent DC/AC conversion for power quality compensation, and to simultaneously provide a power flow from the AC terminals (3a) through the AC/DC converter to the DC terminals (3b) and the energy storage unit (7).

10. The method as claimed in claim 9, wherein the power quality compensation includes at least one of reactive power compensation, harmonic compensation and load balancing.

11. An energy storage system (9) configured to be connected to an electric power distribution grid (13), comprising:

a power converter system (1) as claimed in any of claims 1-8, and
an energy storage unit (7) configured to be connected to the AC/DC converter (3).

Fig. 1

Fig. 2

13

15

11

L

3

~

=

5

9

7

Fig. 3

5

Controlling

a

Fig. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2016/285273 A1 (LEINONEN AKI [FI] ET AL) 29 September 2016 (2016-09-29)<br>* figures 1-2, 5, 7 *<br>* paragraph [0001] - paragraph [0002] *<br>* paragraph [0032] - paragraph [0036] *<br>* paragraph [0058] - paragraph [0077] *<br>* paragraph [0246] *<br>----- | 1-4,8-11<br>5-7 | INV.<br>H02J3/01<br>H02J3/14<br>H02J3/18<br>H02J7/34 |
| Y | US 2016/226107 A1 (WORRY MICHAEL ALAN [US] ET AL) 4 August 2016 (2016-08-04)<br>* figures 1-2 *<br>* paragraph [0054] - paragraph [0055] *<br>----- | 5-7 | |
| X | US 9 124 136 B1 (LIU LIMING [US] ET AL) 1 September 2015 (2015-09-01)<br>* page 1 - page 5 *<br>----- | 1-3 | |
| X | EP 1 156 573 A2 (NGK INSULATORS LTD [JP]; TOKYO ELECTRIC POWER CO [JP]) 21 November 2001 (2001-11-21)<br>* figures 1-12 *<br>* paragraph [0001] - paragraph [0008] *<br>----- | 1-3,9,11 | |

TECHNICAL FIELDS
SEARCHED     (IPC)

H02J

The present search report has been drawn up for all claims

| Place of search | Date of completion of the search | Examiner |
|---|---|---|
| Munich | 10 March 2017 | Dudoignon, David |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 19 1884

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2017

| Patent document cited in search report | | | Publication date | Patent family member(s) | | Publication date |
|---|---|---|---|---|---|---|
| US 2016285273 | A1 | | 29-09-2016 | EP 2976821 A1 | | 27-01-2016 |
| | | | | US 2016285273 A1 | | 29-09-2016 |
| | | | | WO 2014147294 A1 | | 25-09-2014 |
| US 2016226107 | A1 | | 04-08-2016 | NONE | | |
| US 9124136 | B1 | | 01-09-2015 | NONE | | |
| EP 1156573 | A2 | | 21-11-2001 | EP 1156573 A2 | | 21-11-2001 |
| | | | | JP 2001327083 A | | 22-11-2001 |
| | | | | US 2001043013 A1 | | 22-11-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARCO et al.** Harmonic compensation with active front-end converters based only on grid voltage measurements. *Renewable Power Generation Conference,* 2014